# EUROPÄISCHE PATENTSCHRIFT

(11) **EP 3 664 592 B1**
(45) Veröffentlichungstag und Bekanntmachung des Hinweises auf die Patenterteilung: **07.04.2021**
(21) Anmeldenummer: 18750196.0
(22) Anmeldetag: 03.08.2018
(51) Int. Cl.: A01C 7/08

(54) **VERTEILERKOPF FÜR EINE PNEUMATISCH ARBEITENDE VERTEILMASCHINE**
DISTRIBUTING HEAD FOR A PNEUMATICALLY OPERATING DISTRIBUTING MACHINE
TÊTE DE DISTRIBUTION POUR UN DISTRIBUTEUR À FONCTIONNEMENT PNEUMATIQUE

(30) Priorität: 07.08.2017 DE 102017117923
(43) Veröffentlichungstag der Anmeldung: 17.06.2020
(73) Patentinhaber: Amazonen-Werke H. Dreyer GmbH & Co. KG, 49205 Hasbergen (DE)
(72) Erfinder: SCHWAMM, Victor, 49086 Osnabrück (DE); TROEBNER, Michael, 49076 Osnabrück (DE)
(86) Internationale Anmeldenummer: PCT/EP2018/071134
(87) Internationale Veröffentlichungsnummer: WO 2019/030140

(56) Entgegenhaltungen:
- EP-A1- 2 298 055
- EP-A1- 2 959 762
- EP-A2- 0 799 560
- DE-A1-102005 008 290

## Beschreibung

Die Erfindung betrifft einen Verteilerkopf für eine pneumatisch arbeitende Verteilmaschine gemäß dem Oberbegriff des Patentanspruches 1.

Ein derartiger Verteilerkopf für eine pneumatisch arbeitende Verteilmaschine ist in der EP 2 298 055 A1 beschrieben. Bei diesem Verteiler ist ein Absperrschieber vorgesehen, der die Form eines zum ringförmigen Verteilerraumes konzentrischen Zylinderabschnittes aufweist. Mittels dieses Absperrschiebers können gleichzeitig mehrere Eintrittsöffnungen von Verteilerleitungen abgesperrt werden, so dass in einfacher Weise die Arbeitsbreite reduziert wird. Damit zuviel geförderte Förderluft bei Absperrung von Verteilerleitungen durch den eingeschobenen Absperrschieber über abgesperrte Verteilerleitungen zu ermöglichen, ist beim Stand der Technik vorgesehen, dass der Absperrschieber luftdurchlässig ausgebildet ist. Hierdurch kann Förderluft durch die in den Absperrschieber angebrachten Aussparungen aus dem Verteilerkopf in die abgesperrten Verteilerleitungen entweichen. Um die Entweichung von Förderluft durch in den Absperrschieber angebrachten Aussparungen in einfacher Weise zu ermöglichen, ist hier der Absperrschieber siebartig ausgebildet. Nachteilig bei diesem bekannten Absperrschiebers ist, dass nur eine Vielzahl von Verteilerleitungen durch den Absperrschieber gleichzeitig abgesperrt werden können.

Durch die DE 10 2005 008 290 A1 ist ein weiterer Verteilerkopf für eine pneumatisch arbeitende Verteilmaschine gemäß dem Oberbegriff des Anspruchs 1 bekannt. Bei diesem Verteilerkopf können entsprechend den Anforderungen mehrere Verteilerleitungen jeweils einzeln durch separate Absperrschieber, die jeweils mit einem dem Absperrschieber zugeordneten Fußteil in die Abgänge der Verteilerleitung einsetzbar sind, abgesperrt werden. Die Absperrung erfolgt hier so, dass kein Förderluftstrom durch die abgesperrten Verteilerleitungen entweichen kann. Hierdurch kommt es zu ungleichmäßigen Aufteilung des dem Verteilerkopf zugeführten Materiales auf die nicht abgesperrten Verteilerleitungen.

Der Erfindung liegt die Aufgabe zu Grunde, in einfacher Weise es zu ermöglichen, dass bei separaten mittels einzelnen Absperrelementen ab sperrbaren Abgängen von Verteilerleitungen ein Förderluftstrom über die abgesperrten Verteilerleitungen aus dem Verteilerkopf entweichen kann.

Diese Aufgabe wird erfindungsgemäß dadurch gelöst, dass die Absperrelemente luftdurchlässig ausgebildet sind, und dass die Absperrkeile jeweils oberhalb des in den jeweiligen Abgang einzusetzenden Fußteiles zumindest eine in dem Bereich des unteren Endes des Fußteiles ausmündende durchgängige Öffnung aufweisen.

Infolge dieser Maßnahmen kann Förderluft durch die in den jeweiligen Absperrkeil angeordnete durchgängige Öffnung aus dem Verteilerkopf in die jeweils abgesperrte Verteilerleitung entweichen. Hierdurch kann die zu viel zugeführte Förderluft über abgesperrten Verteilerleitungen dennoch entweichen, so dass die gleichmäßige Aufteilung der dem Verteiler zugeführten Materialmenge auf die nicht abgesperrten Verteilerleitungen aufrechterhalten wird.

Um in einfacher Weise zu erreichen, damit kein dem Verteilerkopf zugeführtes Material über die in dem Absperrkeil angeordnete Öffnung in die abgesperrte Verteilerleitung gelangen kann, ist vorgesehen, dass der Verteilerkopf einen gewölbten Deckel aufweist, dass die dem Deckel zugewandte Seite des Absperrkeiles zumindest annähernd an der Innenseite des gewölbten Deckels anliegt, dass zwischen der Innenseite des Deckels und der dem Deckel zugewandten Seite des Absperrkeile sich ein Spalt mit einer Größe befindet, der einen Luftstrom aus den Innenraum der Verteilerkopfes zu der an dem Abgang angeschlossenen Verteilerleitung erlaubt, aber einen Durchgang des zu verteilenden Gutes zu der Verteilerleitung verhindert, dass der Beginn der durchgehenden Öffnung in dem Absperrkeil sich auf der der Innenseite des Deckels zugewandten Seite des Absperrkeiles befindet.

Eine einfache Anordnung der durchgehenden Öffnung in dem Absperrkeil lässt sich dadurch umsetzen, dass die durchgehende Öffnung in dem Absperrkeil schlitzartig und/oder rinnenartig ausgebildet ist.

Eine andere einfache Umsetzung der Anordnung der durchgehenden Öffnung in dem Absperrkeil wird dadurch verwirklicht, dass die durchgehende Öffnung in dem Absperrkeil als Durchbruch und/oder Bohrung ausgebildet ist.

Damit sichergestellt ist, dass der Absperrkeil während des Betriebes sicher in dem Abgang der abgesperrten Verteilerleitung verbleibt, ist vorgesehen, dass die Größe des Fußes des Absperrkeile und die Größe des Abganges der Verteilerkopfes so aufeinander abgestimmt sind, dass der Fuß des Absperrkeiles reibschlüssig in dem Abgang des Verteilerkopfes angeordnet ist.

Weitere Einzelheiten der Erfindung sind der Beispielsbeschreibung und den Zeichnungen zu entnehmen. Die Zeichnungen zeigen
- Fig.1: eine an einem Ackerschlepper angekoppelte gezogene als Sämaschine ausgebildete pneumatische Verteilmaschine in Prinzipdarstellung und perspektivischer Ansicht,

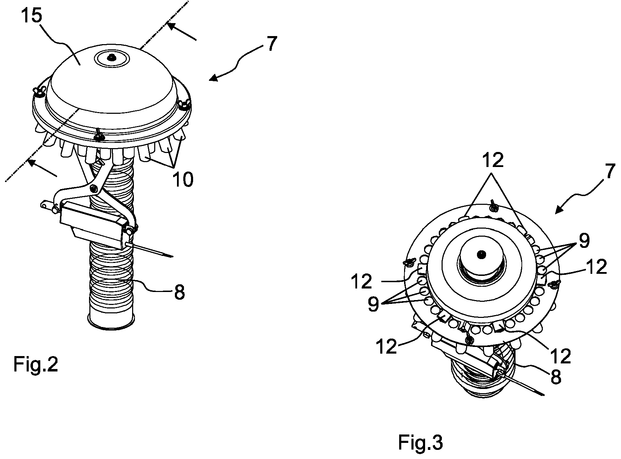

- Fig.2: den Verteilerkopf der pneumatischen Sämaschine in Prinzipdarstellung, vergrößerten Maßstab und in perspektivischer Ansicht,
- Fig.3: den Verteilerkopf gemäß Fig.2 mit abgenommenen Deckel in einer anderen perspektivischen Ansicht,
- Fig.4: den Verteilerkopf mit Zuführungsrohr im Schnitt IV - IV und perspektivischer Darstellung,
- Fig.5: eine Teilansicht des Verteilerkopfes in der Darstellung gemäß Fig.4 im vergrößertem Maßstab, wobei in einer abgesperrten Abgangsleitung ein als Absperrkeil ausgebildetes Absperrelement eingesetzt ist,
- Fig.6: den Verteilerkopf mit Zuführungsrohr im Schnitt IV - IV mit eingezeichneter der Luftführung an der durch den Absperrkeil abgesperrten Verteilerleitung,
- Fig.7: eine Teilansicht des Verteilerkopfes in der Darstellung gemäß Fig.6 im vergrößertem Maßstab, mit eingezeichneter der Luftführung an der durch den Absperrkeil abgesperrten Verteilerleitung,
- Fig.8: einen Absperrkeil in perspektivischer Ansicht,
- Fig.9: den Absperrkeil gemäß Fig.8 im Schnitt IX - IX,
- Fig.10: einen weiteren Absperrkeil in perspektivischer Ansicht und
- Fig.11: den Absperrkeil gemäß Fig.10 im Schnitt XI - XI.

Die pneumatische Verteilmaschine 1 ist als gezogene Sämaschine ausgebildet und weist den Rahmen 2 mit den darauf angeordneten Vorratsbehälter 3 auf. Der Rahmen 2 ist mit seiner Vorderseite über eine Kuppeleinrichtung an die Kuppeleinrichtung des Ackerschleppers 4 angeordnet. Auf der Rückseite des Rahmens 2 ist der einklappbare Scharrahmen 5 mit den Säscharen 6 angeordnet. Auf dem Scharrahmen sind zwei Verteilerköpfe 7 mit den senkrecht stehenden Zuführrohren 8 angeordnet. Den Zuführrohren 8 und den Verteilerköpfen 7 wird über daran angeschlossene, jedoch nicht dargestellte pneumatisch beaufschlagte Zuführleitungen über dem Vorratsbehälter 3 zugeordnete Dosiereinrichtungen das sich in dem Vorratsbehälter 3 befindliche Material, wie Saatgut, Dünger oder dergleichen in einstellbaren Mengen zugeleitet.

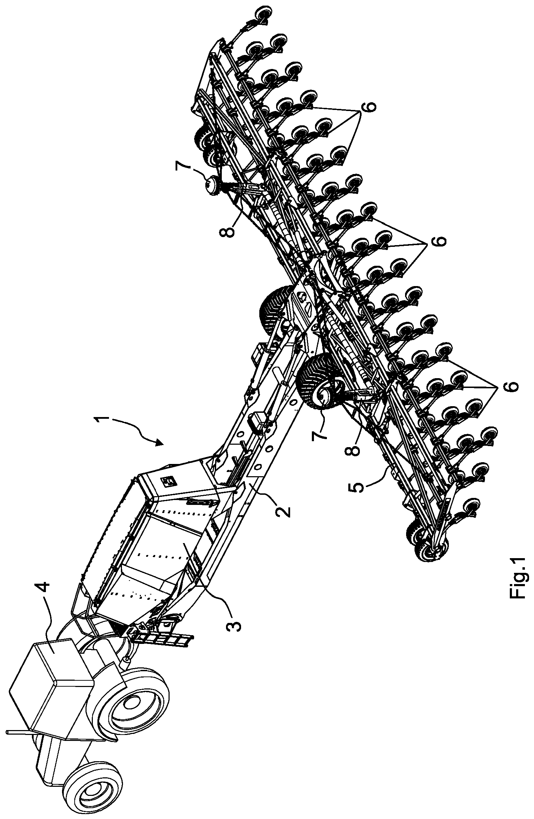

Somit ist der jeweilige Verteilerkopf 7 mit einem Vorratsbehälter 3 verbunden ist. An dem Verteilerkopf 7 sind kreissymmetrisch verteilt angeordnete Abgänge 9 angeordnet. An den Abgängen 9 ist jeweils eine in Fig.1 nicht dargestellte Verteilerleitung 10 angeschlossen. Die jeweilige Verteilerleitung 10 führt zu den als Säscharen 6 ausgebildeten Ausbringeinrichtungen für das zu verteilende Gut. Über den Verteilerkopf 7 wird das zugeführte Material in bekannter Weise auf die zu den einzelnen Säscharen 6 führenden Abgängen 9 des Verteilerkopfes 7 und somit den Verteilerleitung 10 aufgeteilt.

Einzelne Abgänge 9 des Verteilerkopfes 7 können durch mit diesen zusammenwirkenden luftdurchlässige Absperrelemente 11 abgesperrt werden. Die Absperrelemente 11 sind als Absperrkeile 12 mit einem in den jeweiligen abzusperrenden Abgang 9 des Verteilerkopfes einzusetzenden Fußteil 13 ausgebildet. Die Größe des Fußteiles 13 des jeweiligen Absperrkeiles 12 und die Größe des Abganges 9 des Verteilerkopfes 7 so aufeinander abgestimmt sind, dass der Fußteil 13 des Absperrkeiles 12 reibschlüssig in dem Abgang des Verteilerkopfes 7 angeordnet ist.

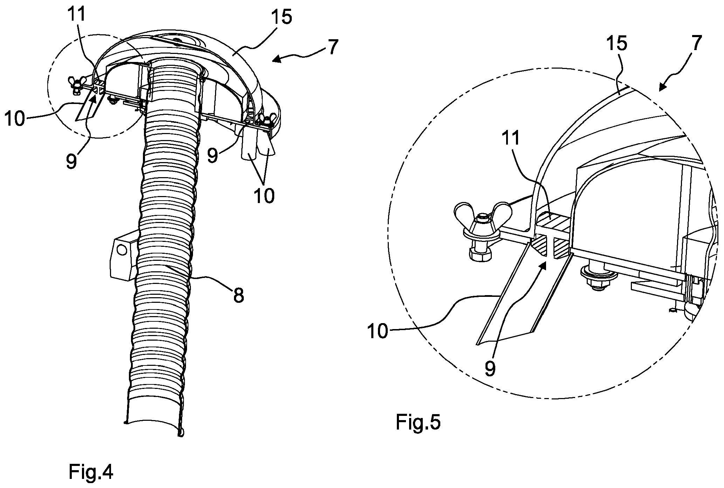

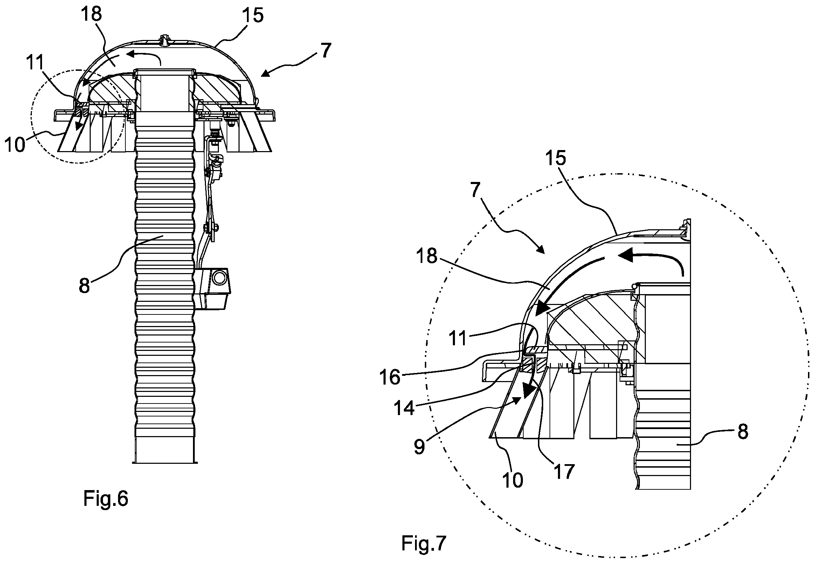

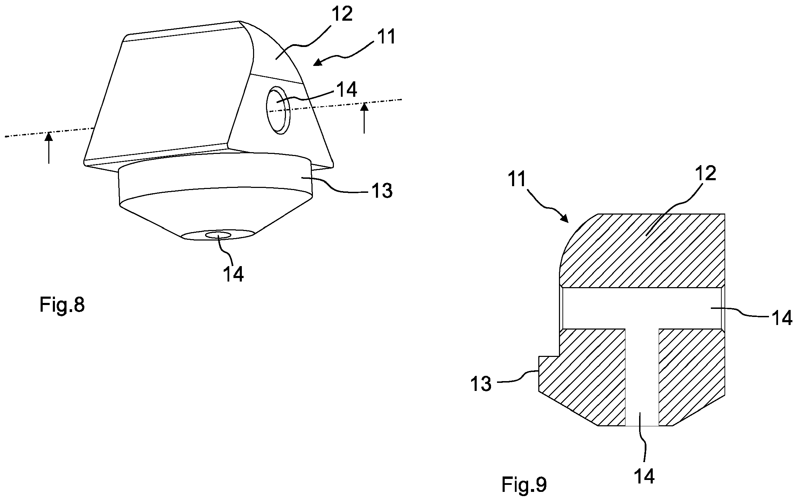

Die als Absperrkeile 12 ausgebildeten Absperrelemente 11 sind mit ihrem Fußteil 13 jeweils in den jeweiligen Abgang 9 einzusetzen. Die Absperrkeile 12 weisen jeweils oberhalb des in den jeweiligen Abgang 9 einzusetzenden Fußteiles 13 zumindest eine in dem Bereich des unteren Endes des Fußteiles 13 ausmündende durchgängige Öffnung 14 auf. Die durchgehende Öffnung 14 in dem Absperrkeil 13 ist gemäß dem Ausführungsbeispiel nach den Fig. 4 bis 9 als Durchbruch und/oder Bohrung ausgebildet.

Der Verteilerkopf 7 weist einen gewölbten Deckel 15 aufweist. Die dem Deckel 15 zugewandte Seite des Absperrkeiles 12 liegt zumindest annähernd an der Innenseite des gewölbten Deckels 15 an. Zwischen der Innenseite des Deckels 15 und der dem Deckel 15 zugewandten Seite des Absperrkeile 12 befindet sich ein Spalt 16 mit einer Größe, der einen Luftstrom 17 aus den Innenraum 18 der Verteilerkopfes 7 zu der an dem Abgang 9 angeschlossenen Verteilerleitung 10 erlaubt, aber einen Durchgang des zu verteilenden Gutes zu der Verteilerleitung 10 verhindert. Der Beginn der durchgehenden Öffnung 14 in dem Absperrkeil 12 befindet sich auf der der Innenseite des Deckels 15 zugewandten Seite des Absperrkeiles 12.

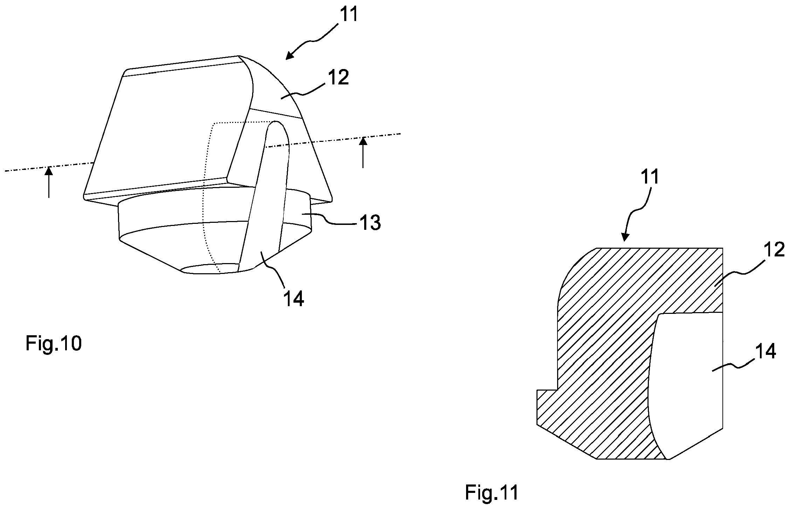

Die durchgehende Öffnung 14 in dem Absperrkeil 12 ist gemäß dem Ausführungsbeispiel nach den Fig. 10 und 11 schlitzartig und/oder rinnenartig ausgebildet.

## Patentansprüche

1. Verteilerkopf (7) für eine pneumatisch arbeitende Verteilmaschine (1) für Saatgut, Dünger und dergleichen, wobei der Verteilerkopf (7) mit einem Vorratsbehälter (3) verbunden ist und an dem Verteilerkopf (7) kreissymmetrisch verteilt angeordnete Abgänge angeordnet sind, an denen Verteilerleitungen (10) anschließen, die zu Ausbringeinrichtungen (6) für das zu verteilende Gut führen, und mit den Abgängen (9) zusammenwirkende Absperrelemente (11) in dem Verteilerkopf (7) anzuordnen sind, um eine oder mehrere der Verteilerleitungen (10) abzusperren, wobei die Absperrelemente (11) als Absperrkeile (12) mit einem in den jeweiligen abzusperrenden Abgang (9) einzusetzenden Fußteil (13) ausgebildet sind, **dadurch gekennzeichnet, dass** die Absperrelemente luftdurchlässig ausgebildet sind, und dass die Absperrkeile (12) jeweils oberhalb des in den jeweiligen Abgang (9) einzusetzenden Fußteiles (13) zumindest eine in dem Bereich des unteren Endes des Fußteiles (13) ausmündende durchgängige Öffnung (14) aufweisen.

2. Verteilerkopf (7) nach Anspruch 1, **dadurch gekennzeichnet, dass** der Verteilerkopf einen gewölbten Deckel (15) aufweist, dass die dem Deckel (15) zugewandte Seite des Absperrkeiles (12) zumindest annähernd an der Innenseite des gewölbten Deckels (15) anliegt, dass zwischen der Innenseite des Deckels (15) und der dem Deckel (15) zugewandten Seite des Absperrkeile (12) sich ein Spalt (16) mit einer Größe befindet, der einen Luftstrom (17) aus den Innenraum (18) der Verteilerkopfes (7) zu der an dem Abgang (9) angeschlossenen Verteilerleitung (10) erlaubt, aber einen Durchgang des zu verteilenden Gutes zu der Verteilerleitung (10) verhindert, dass der Beginn der durchgehenden Öffnung (14) in dem Absperrkeil (12) sich auf der der Innenseite des Deckels (15) zugewandten Seite des Absperrkeiles (12) befindet.

3. Verteilerkopf nach zumindest einem der vorstehenden Ansprüche, **dadurch gekennzeichnet, dass** die durchgehende Öffnung (14) in dem Absperrkeil (12) schlitzartig und/oder rinnenartig ausgebildet ist.

4. Verteilerkopf nach zumindest einem der vorstehenden Ansprüche 1 und/oder 2, **dadurch gekennzeichnet, dass** die durchgehende Öffnung (14) in dem Absperrkeil (12) als Durchbruch und/oder Bohrung ausgebildet ist.

5. Verteilerkopf nach zumindest einem der vorstehenden Ansprüche, **dadurch gekennzeichnet, dass** die Größe des Fußteiles (13) des Absperrkeiles (12) und die Größe des Abganges (9) der Verteilerkopfes (3) so aufeinander abgestimmt sind, dass der Fußteil (13) des Absperrkeiles (12) reibschlüssig in dem Abgang (9) des Verteilerkopfes (3) angeordnet ist.

## Claims

1. Distributor head (7) for a pneumatically operating distribution machine (1) for seed, fertilizer and the like, wherein the distributor head (7) is connected to a storage container (3) and outlets are arranged in circular symmetric distribution on the distributor head (7), said outlets being adjoined by distributor lines (10) that lead to dispensing devices (6) for the material to be distributed, and shut-off elements (11) that cooperate with the outlets (9) can be arranged in the distributor head (7) in order to shut off one or more of the distributor lines (10), wherein the shut-off elements (11) are in the form of shut-off wedges (12) with a foot part (13) to be inserted into the particular outlet (9) to be shut off, **characterized in that** the shut-off elements are configured in an air-permeable manner, and **in that** the shut-off wedges (12) each have, above the foot part (13) to be inserted into the particular outlet (9), at least one through-opening (14) that leads out in the region of the lower end of the foot part (13).

2. Distributor head (7) according to Claim 1, **characterized in that** the distributor head has a curved cover (15), **in that** that side of the shut-off wedge (12) that faces the cover (15) bears at least approximately against the inner side of the curved cover (15), **in that**, between the inner side of the cover (15) and that side of the shut-off wedges (12) that faces the cover (15), a gap (16) with a size is located that allows an air flow (17) from the interior (18) of the distributor head (7) to the distributor line (10) connected to the outlet (9) but prevents the material to be distributed from passing through to the distributor line (10), and **in that** the start of the through-opening (14) in the shut-off wedge (12) is located on that side of the shut-off wedge (12) that faces the inner side of the cover (15).

3. Distributor head according to at least one of the preceding claims, **characterized in that** the through-opening (14) is formed in a slot-like and/or channel-like manner in the shut-off wedge (12).

4. Distributor head according to at least one of the preceding Claims 1 and/or 2, **characterized in that** the through-opening (14) in the shut-off wedge (12) is in the form of an aperture and/or bore.

5. Distributor head according to at least one of the preceding claims, **characterized in that** the size of the foot part (13) of the shut-off wedge (12) and the size of the outlet (9) of the distributor head (3) are coordinated with one another such that the foot part (13) of the shut-off wedge (12) is arranged in a frictional manner in the outlet (9) of the distributor head (3).

## Revendications

1. Tête de distribution (7) destinée à un distributeur à fonctionnement pneumatique (1) pour des semences, de l'engrais et similaires, dans laquelle la tête de distribution (7) est reliée à un réservoir (3), et sur la tête de distribution (7), des sorties sont disposées de manière répartie en symétrie circulaire auxquelles se raccordent des conduits de distribution (10) qui conduisent à des dispositifs d'épandage (6) pour le produit à distribuer, et des éléments de fermeture (11) coopérant avec les sorties (9) sont à disposer dans la tête de distribution (7) pour fermer un ou plusieurs des conduits de distribution (10), dans laquelle les éléments de fermeture (11) sont réalisés sous la forme de coins de fermeture (12) dotés d'une partie de base (13) à insérer dans la sortie (9) à verrouiller respectivement,
**caractérisée en ce que** les éléments de fermeture sont réalisés de manière perméable à l'air, et **en ce que** les coins de fermeture (12) présentent respectivement au-dessus de la partie de base (13), à insérer dans la sortie (9) respective, au moins une ouverture (14) traversante débouchant au niveau de l'extrémité inférieure de la partie de base (13).

2. Tête de distribution (7) selon la revendication 1, **caractérisée en ce que** la tête de distribution présente un couvercle bombé (15), **en ce que** la face du coin de fermeture (12), tournée vers le couvercle (15), s'applique au moins approximativement contre la face intérieure du couvercle bombé (15), **en ce qu'**entre la face intérieure du couvercle (15) et la face du coin de fermeture (12), tournée vers le couvercle (15), se trouve un interstice (16) d'une dimension qui permet un flux d'air (17) allant de l'espace intérieur (18) de la tête de distribution (7) au conduit de distribution (10) raccordé à la sortie (9) mais empêche un passage du produit à distribuer jusqu'au conduit de distribution (10), **en ce que** le début de l'ouverture traversante (14) dans le coin de fermeture (12) se trouve sur la face du coin de fermeture (12), tournée vers la face intérieure du couvercle (15).

3. Tête de distribution selon l'une quelconque des revendications précédentes, **caractérisée en ce que** l'ouverture traversante (14) dans le coin de fermeture (12) est réalisée en forme de fente et/ou de gorge.

4. Tête de distribution selon au moins l'une des revendications précédentes 1 et/ou 2, **caractérisée en ce que** l'ouverture traversante (14) est réalisée dans le coin de fermeture (12) sous forme de perçage et/ou d'alésage.

5. Tête de distribution selon au moins l'une des revendications précédentes, **caractérisée en ce que** la dimension de la partie de base (13) du coin de fermeture (12) et la dimension de la sortie (9) de la tête de distribution (3) sont ajustées l'une par rapport à l'autre de telle sorte que la partie de base (13) du coin de fermeture (12) est disposée par adhérence dans la sortie (9) de la tête de distribution (3) .
